# EUROPEAN PATENT SPECIFICATION

(11) **EP 2 732 960 B1**
(45) Date of publication and mention of the grant of the patent: **09.10.2019**
(21) Application number: 13192831.9
(22) Date of filing: 14.11.2013
(51) Int. Cl.: B31B 70/64

(54) **Machine for producing bags of flexible material**
Maschine zum Herstellen von Beuteln aus flexiblem Material
Machine servant à fabriquer des sacs de matériau souple

(30) Priority: 15.11.2012 IT MI20121943
(43) Date of publication of application: 21.05.2014
(73) Proprietor: Elba S.p.A., 20020 Magnago MI (IT)
(72) Inventor: Mainini, Giorgio, 20022 Castano Primo (MI) (IT)
(74) Representative: Branca, Emanuela

(56) References cited:
- JP-A- 2000 343 283
- JP-A- 2006 297 477
- US-A1- 2010 108 249

## Description

The present invention refers to a machine for producing bags of flexible material, intended for example for producing bags suitable for containing sterile medical products, pharmaceuticals, foods and yet more.

In order to produce bags and packets of flexible material, there are known machines called welders or "bag makers" that normally operate from one or more films of suitable material, for example plastic or thermoplastic, fed forwards by one or more respective rollers or cylinders, known as "calendars".

The flexible material, plastic or not, is thus fed towards a subsequent welding group, provided with one or more upper welding bars or plates and one or more corresponding lower welding bars or plates. The upper and lower welding bars or plates are heated and act on the film according to a vertical alternate movement, pinching such a film along one or more linear portions. The intervention of the upper and lower welding bars or plates is defined in the field as "stroke".

Downstream of the welding group corresponding cutting groups are positioned to separate apart the single bags just welded. The bags thus obtained are finally collected in piles or rolls in the last work station of the machine. Once the piles or rolls of bags are complete, in the preselected number, such bags are picked up by handling groups to be packaged inside corresponding boxes or similar containers.

In detail, a typical welding group of a machine for producing bags of flexible material can comprise a single lower welding plate and a single upper welding plate, of a shape and size compatible with the shape and size of the lower welding plate. At least one of the welding plates, like for example the upper welding plate, is mobile with an alternate motion along a plurality of vertical guiding columns. The alternate motion of such a welding plate is usually generated by one or two motors arranged at the welding plate itself. A conventional machine for producing bags of flexible material is disclosed, for example, in document US 2010/0108249 A1, which machine comprises an infeed section for supplying a film of flexible material, a welding section provided with a mobile upper welding plate and with a corresponding stationary lower welding plate and a cutting section for separating individual bags.

The bodies of the lower and upper welding plates are typically manufactured from aluminium, since there is a need to both distribute the heat uniformly along all the plates, and to be able to have considerable rigidity, in particular in terms of the mobile welding plate, which acts on the thermoplastic film in the entire area to be welded. The aluminium must, moreover, be suitably worked and smoothed to ensure surface linearity.

During the operation of the machine, the movement together and apart of the upper welding plate and the lower welding plate can cause imbalances due to the imperfect distribution of weights on the mobile welding plate and to the not perfectly linear movement of the mobile welding plate itself. It should be observed that apparently small imbalances in weight, of the order of a few kilograms, and/or misalignments of a few hundredths of a millimetre in the contact between the lower and upper welding plates can generate inadequate welding lines. An imperfect welding of the perimeter edges causes particular problems in some types of bags, like for example those intended to contain sterile medical products, which must respect precise and strict quality standards.

In addition, the movement together and apart of the upper welding plate and lower welding plate is controlled and guided by complex transmission mechanisms that are biased by high inertias (accelerations, stopping, motion inversions, new accelerations, etc.) and made to rotate at high speeds. The current welding groups of machines for producing bags of flexible material thus tend to wear out quickly, with consequent possibilities of breaking and needing to stop the machine.

Finally, due to the considerable weight of the aluminium body that forms the mobile welding plate, the removal of such an aluminium body with respect to the structure of the machine is problematic, which may need to be carried out for example for maintenance operations or to modify the format of the bags being produced on the machine itself.

The purpose of the present invention is therefore to make a machine for producing bags of flexible material, intended for example for producing bags suitable for containing sterile medical products, pharmaceuticals, foods and yet more, which is able to solve the aforementioned drawbacks of the prior art in an extremely simple, cost-effective and particularly functional manner.

In detail, a purpose of the present invention is to make a machine for producing bags of flexible material that is able to ensure a movement that is as linear and homogeneous as possible of the mobile welding plate of the relative welding group.

Another purpose of the present invention is that of making a machine for producing bags of flexible material in which it is possible to identify in real time and immediately correct not just possible malfunctions of the motorised means and of the motion transmission mechanisms of the mobile welding plate, but also possible misalignments and imbalances, even by a small amount, in the vertical alternate movement of such a mobile welding plate.

A further purpose of the present invention is to make a machine for producing bags of flexible material in which it is possible to reduce the inertias and the forces that impact upon the motorised means and on the motion transmission mechanisms of the mobile welding plate.

Yet another purpose of the present invention is to make a machine for producing bags of flexible material in which it is possible to easily remove and equally easily remount the aluminium body that forms the mobile welding plate.

These purposes according to the present invention are accomplished by making a machine for producing bags of flexible material, intended for example for producing bags suitable for containing sterile medical products, pharmaceuticals, foods and yet more, as outlined in claim 1.

Further characteristics of the invention are highlighted by the dependent claims, which are an integral part of the present description.

The characteristics and advantages of a machine for producing bags of flexible material according to the present invention will become clearer from the following description, given as an example and not for limiting purposes, referring to the attached schematic drawings, in which:

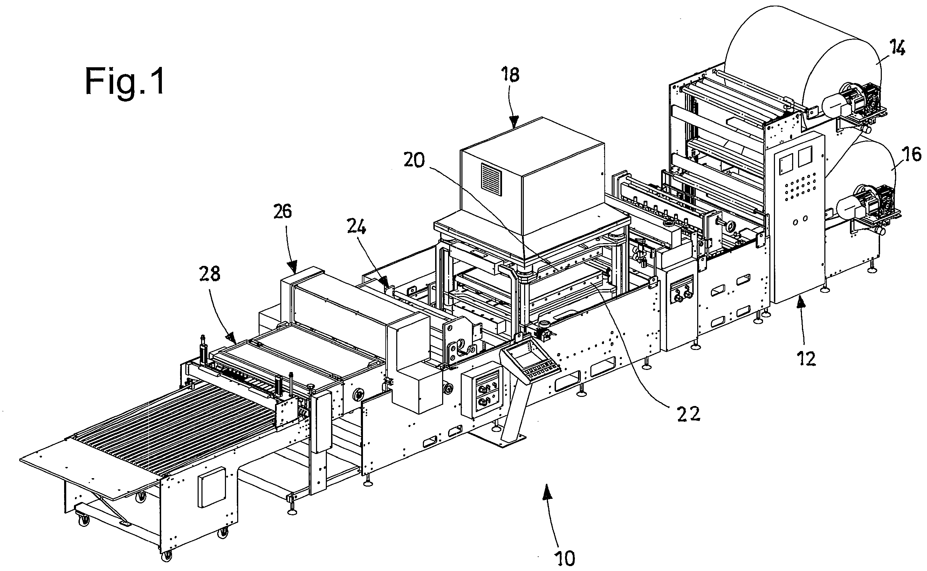

figure 1 is a perspective view of a preferred embodiment of the machine for producing bags of flexible material according to the present invention;
figure 2 is a longitudinal section view of the welding group of the machine of figure 1;

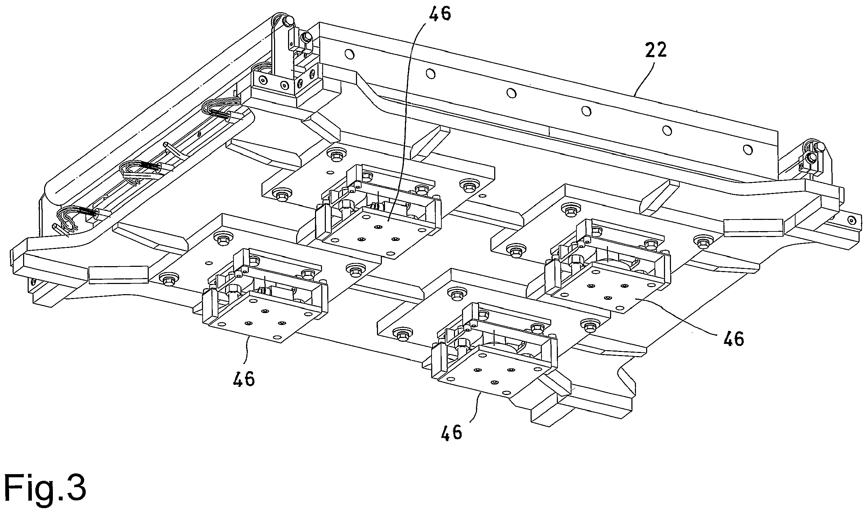

figure 3 is a perspective view from below of the lower welding plate of the welding group of figure 2;

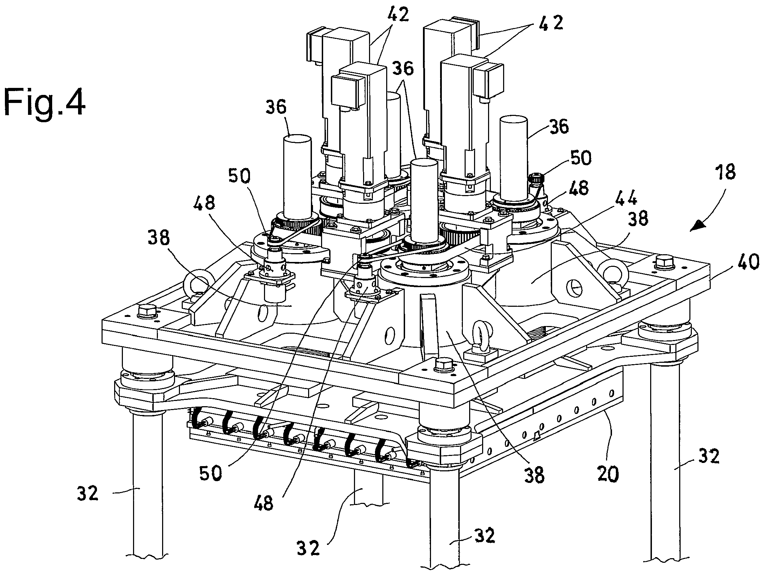

figure 4 is a perspective view from above of the welding group of figure 2, in which the upper welding plate and the relative motorised means and motion transmission mechanisms are highlighted;
figure 5 is a longitudinal section view of the upper welding plate and of the relative motorised means and motion transmission mechanisms; and
figure 6 is a section view of the upper welding plate, in which the system for coupling and uncoupling the relative metallic welding element is highlighted.

With reference to the figures, a preferred embodiment of a machine for producing bags of flexible material according to the present invention is shown, wholly indicated with reference numeral 10. The machine 10 is provided with a plurality of distinct work stations arranged in line, in other words arranged in sequence one after the other, which allow the bags to be made from one or more films of flexible material, like for example plastic or thermoplastic.

The machine 10 firstly comprises a reel-holder group 12, which rotatably supports an upper reel 14 and a lower reel 16, one above the other and having parallel axes, which respectively feed a first film of flexible material and a second film of flexible material.

The films coming from the unwinding of the respective upper 14 and lower 16 reels are positioned one above the other and are thus introduced, downstream of the reel-holder group 12, through a welding group 18, provided with at least one upper welding plate 20 and at least one corresponding lower welding plate 22. The upper 20 and lower 22 welding plates are heated and are provided with corresponding linear welding tracks. The upper 20 and lower 22 welding plates thus act on the films according to a vertical alternate movement, pinching such films along one or more linear portions.

Downstream of the welding group 18 there is a longitudinal cutting group 24 and a transversal cutting group 26, which separate from one another the single bags just obtained further to the welding operation on the films. The bags thus obtained can finally be gathered in piles or "stacks" in a stacking group 28 arranged downstream of the longitudinal 24 and transversal 26 cutting groups.

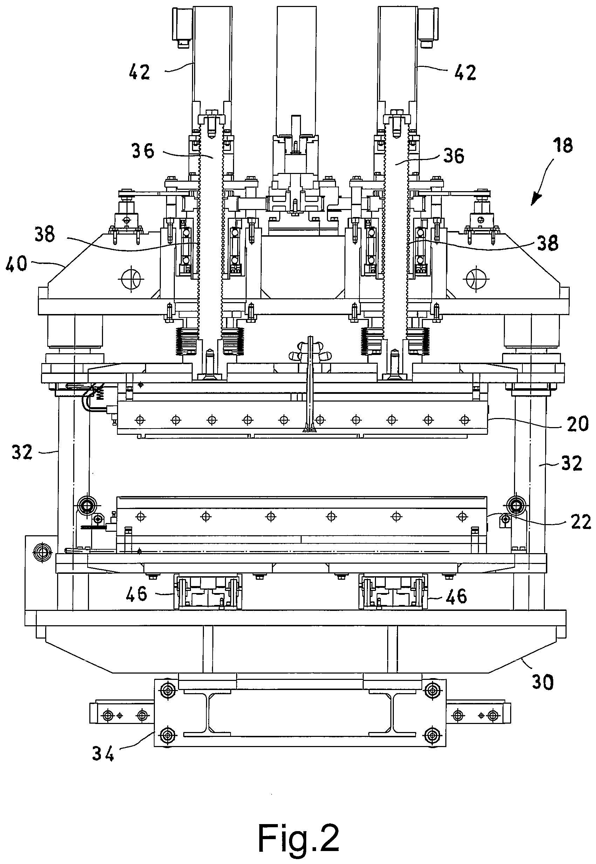

In detail, with reference in particular to the welding group 18 (figure 2), the lower welding plate 22 is operatively connected to a base 30, whereas the upper welding plate 20, having a shape and size that are compatible with the shape and size of such a lower welding plate 22, is mobile with an alternate motion along a plurality of vertical guiding columns 32, integral with the base 30. The base 30 is mounted on corresponding linear guides 34 that allow the welding group 18, both when the machine 10 is functioning, and when it is not functioning, to be moved along a horizontal plane in order to adapt to the type and dimensions of the bags to be produced.

The upper welding plate 20 is constrained at the top to moving means consisting of four screws 36, arranged on the vertices of a rectangle, which slide vertically inside respective female screws 38 formed through a cover 40 fixed to above the vertical guiding columns 32. According to the invention, each screw 36 is moved vertically inside the respective female screw 38 by a respective motor 42 integral with the cover 40. Preferably, all of the motors 42 are identical to one another and are arranged in an equidistant manner from the respective screws 36, so as to make uniform both the load, and the thrust action on the upper welding plate 20. In this way it is possible to obtain a movement that is as linear and homogeneous as possible of the upper welding plate 20 with respect to the lower welding plate 22. However, it is possible the use of motors 42 that are different to one another, just as it is also possible for such motors 42 to be arranged at different distances from the respective screws 36.

Each motor 42 is operatively connected to the respective screw 36 through corresponding motion transmission means, like for example a toothed belt 44 arranged between each motor 42 and the respective screw 36. Each motor 42 is also operatively connected to an electronic control unit (not shown) capable of managing the functioning of all motors 42. The electronic control unit is thus capable of activating simultaneously and in perfect synchrony all motors 42, as well as of maintaining all functioning parameters controlled in order for the movement of the upper welding plate 20 to always be regular and uniform.

The lower welding plate 22 is provided with at least three sensor means 46, consisting of load cells, capable of instantly detecting, for each "stroke" that the upper welding plate 20 performs on the lower welding plate 22, the compression load measured at each point of force that such an upper welding plate 20 imparts on such a lower welding plate 22. There are at least three load cells 46 (four in the embodiment shown in the figures) and they can be advantageously arranged between the lower welding plate 22 and the base 30.

The load cells 46 are operatively connected to the electronic control unit to send to such an electronic control unit the signals relative to the compression load, measured at all points of force, derived from each "stroke" that the upper welding plate 20 performs on the lower welding plate 22. The aforementioned signals, detected during the pressure or welding step, are interpreted by the electronic control unit to independently manage the functioning of each single motor 42. For example, if the signals were indicative of an anomalous compression load, or one that is not uniformly distributed over all the surface of the lower welding plate 22, the electronic control unit would immediately modify the position parameters of one or more motors 42 to rebalance the correct alignment of the upper welding plate 20. If needed, the electronic control unit could immediately stop all the motors 42 to avoid potential damages to the entire welding group 18.

Each screw 36 is provided with control means of its current position, which must coincide with the controlled position and with the current position of all of the remaining screws 36. Such control means are operatively connected to the electronic control unit and can consist, for example, of an angular position transducer 48, or "encoder", provided with a respective gearing 50 connected to each screw 36. Such control means 48 and 50 thus operate to verify the perfect synchronisation of the simultaneous movement of the screws 36, consequently ensuring the homogeneity of movement of the upper welding plate 20.

The electronic control unit is configured to intervene by instantly blocking all of the motors 42 in the condition in which the signals sent by such control means 48 and 50 are indicative of an anomalous movement of one or more of the respective screws 36.

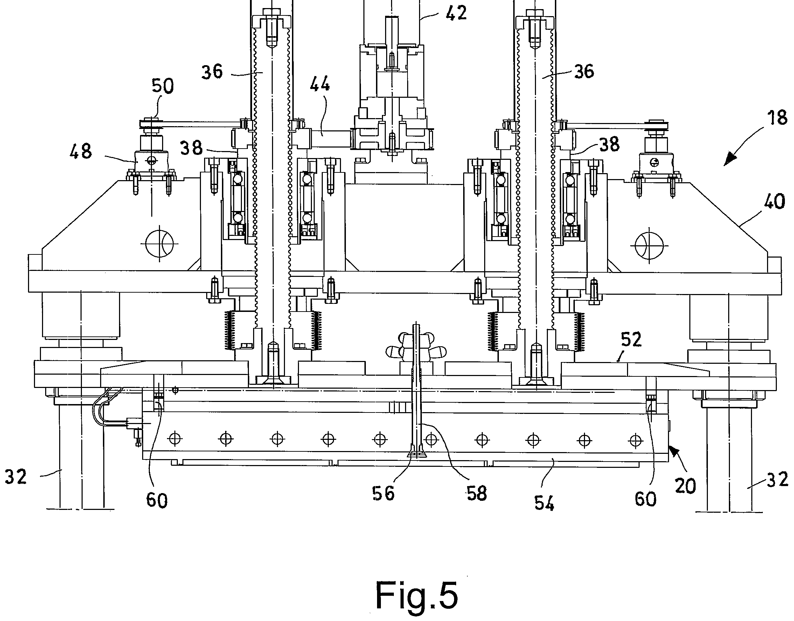

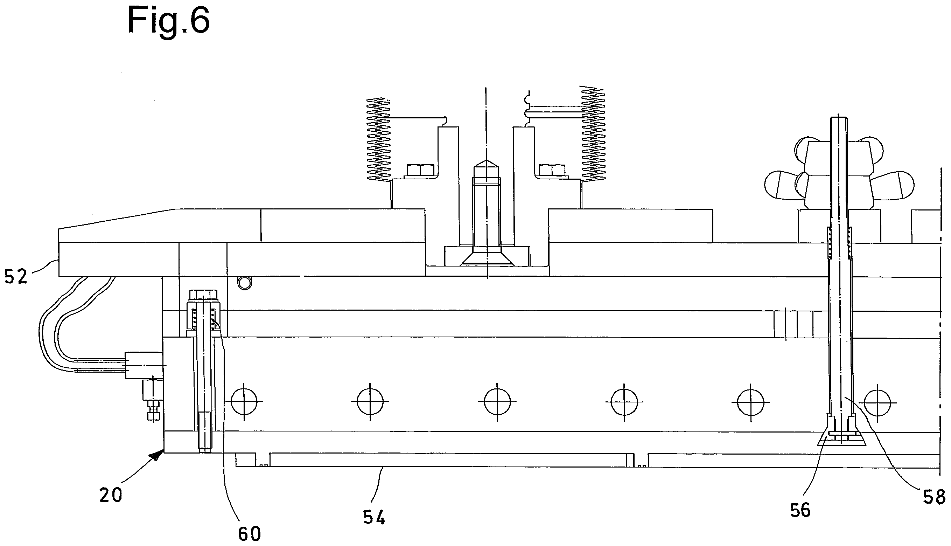

With reference in particular to figures 5 and 6, it is possible to note how the upper welding plate 20 consists of a supporting plate 52, slidably constrained to the vertical guiding columns 32, and of a welding element 54. The welding element 54, normally manufactured from aluminium, is removable with respect to the supporting plate 52 to modify the format of the bags being produced on the machine 10, or for maintenance operations of the machine 10 itself.

The welding element 54 is supported by a horizontal guiding rod 56 constrained to the supporting plate 52. In the operating configuration of the upper welding plate 20, the welding element 54 is made integral with the horizontal guiding rod 56 through corresponding fixing means 58. For safety reasons, also considering its considerable weight, the welding element 54 is also made integral directly with the supporting plate 52 through a plurality of blocking screws 60.

If it were necessary to remove the welding element 54 from the supporting plate 52, firstly the blocking screws 60 would have to be loosened or removed, and then the fixing means 58 that stably constrain the welding element 54 to the horizontal guiding rod 56 would have to be loosened. The welding element 54 would at this point be in the condition of being able to slide horizontally along the horizontal guiding rod 56, but without the danger of falling onto the lower plate 22. The horizontal guiding rod 56 thus allows the workers with the task of removing the welding element 54 to not have to manually support such a welding element 54 while the respective blocking screws 60 are loosened or removed.

It has thus been seen that the machine for producing bags of flexible material according to the present invention achieves the purposes highlighted earlier.

The machine for producing bags of flexible material of the present invention thus conceived can in any case undergo numerous modifications and variants, all of which are covered by the same inventive concept; moreover, all of the details can be replaced by technically equivalent elements. In practice, the materials used, as well as the shapes and sizes, can be whatever according to the technical requirements.

The scope of protection of the invention is therefore defined by the attached claims.

## Claims

1. Machine (10) for producing bags of flexible material comprising:
- a reel-holder group (12) which supports in a removable manner at least one reel (14, 16) capable of supplying at least one film of flexible material;
- a welding group (18) provided with at least one upper welding plate (20) and with at least one corresponding lower welding plate (22) which are heated and provided with corresponding linear welding tracks, said upper (20) and lower (22) welding plates acting on said film according to a vertical alternate movement, pinching said film along one or more linear portions;
- at least one cutting group (24, 26) which separates from each other the single bags just obtained further to the welding operation on said film,
wherein the lower welding plate (22) is operatively connected to a base (30), whereas the upper welding plate (20) is mobile with an alternate motion along a plurality of vertical guiding columns (32) and is constrained at the top to four moving means (36, 38) arranged on the vertices of a rectangle and associated with a cover (40) fixed above said vertical guiding columns (32), each of the single moving means (36, 38) being made of a screw (36) which vertically slides inside a respective female screw (38) obtained across the cover (40) and is driven by a respective motor (42) integral with the cover (40), each screw (36) being provided with control means (48, 50) of its current position, wherein the lower welding plate (22) is provided with at least three sensor means (46) made of load cells capable of instantly detecting the compression load, measured at each point of force, which the upper welding plate (20) imparts onto said lower welding plate (22), wherein each motor (42) is operatively connected to an electronic control unit capable of managing the functioning of all motors (42), said electronic control unit being capable of activating simultaneously and in perfect synchrony all motors (42), as well as of maintaining all functioning parameters controlled in order for the movement of the upper welding plate (20) to be always regular and uniform, and said sensor means (46) being operatively connected to the electronic control unit in order to send to said electronic control unit the signals relating to the compression load, measured at all points of force, derived from each "stroke" performed by said upper welding plate (20) onto said lower welding plate (22), said signals being interpreted by said electronic control unit in order to manage independently the functioning of each single motor (42), and said control means (48, 50) being operatively connected to the electronic control unit in order to verify that said current position coincides with the controlled position and with the current position of all remaining screws (36) and to verify the perfect synchronization of the simultaneous movement of the screws (36), consequently guaranteeing the homogeneity of movement of the upper welding plate (20).

2. Machine (10) according to claim 1, **characterized in that** all motors (42) are identical to each other and are arranged in an equidistant manner from the respective moving means (36, 38), so as to make uniform both the load, and the thrust action on the upper welding plate (20) in order to obtain a movement as much linear and homogeneous as possible of said upper welding plate (20) with respect to the lower welding plate (22).

3. Machine (10) according to claim 1, **characterized in that** each motor (42) is operatively connected to the respective screw (36) through corresponding motion transmission means (44).

4. Machine (10) according to claim 3, **characterized in that** said motion transmission means (44) are made of a toothed belt interposed between each motor (42) and the respective screw (36).

5. Machine (10) according to claim 1, **characterized in that** said sensor means (46) are interposed between the lower welding plate (22) and the base (30).

6. Machine (10) according to claim 1, **characterized in that** said control means (48, 50) are made of an angular position transducer (48), or encoder, provided with a respective gearing (50) connected to each screw (36).

7. Machine (10) according to any of the claims 1 to 6, **characterized in that** the upper welding plate (20) is made of a supporting plate (52), slidingly constrained to the vertical guiding columns (32), and of a welding element (54), removable with respect to said supporting plate (52) in order to modify the format of the bags being produced on the machine (10), or for maintenance operations of said machine (10).

8. Machine (10) according to claim 7, **characterized in that** the welding element (54) is supported by a horizontal guiding rod (56) constrained to the supporting plate (52), said welding element (54) being made integral with said horizontal guiding rod (56) through corresponding fixing means (58) in the operating configuration of the upper welding plate (20), said welding element (54) horizontally sliding along said horizontal guiding rod (56) when said fixing means (58) are loosened.

9. Machine (10) according to claim 8, **characterized in that** the welding element (54) is also made integral directly to the supporting plate (52) through a plurality of blocking screws (60).

10. Machine (10) according to any of the preceding claims, **characterized in that** the base (30) is mounted on corresponding linear guides (34) which allow the welding group (18) to be moved along a horizontal plane in order to adapt to the type and dimensions of the bags to be produced.

## Patentansprüche

1. Maschine (10) zum Herstellen von Beuteln aus flexiblem Material umfassend:
- eine Rollenhaltergruppe (12), welche zumindest eine Rolle (14, 16) in abnehmbarer Weise trägt, die zumindest eine Folie aus flexiblem Material liefern kann;
- eine Schweißgruppe (18), die mit zumindest einer oberen Schweißplatte (20) und mit zumindest einer entsprechenden unteren Schweißplatte (22) versehen ist, welche beheizt und mit entsprechenden linearen Schweißbahnen versehen sind, wobei diese obere (20) und untere (22) Schweißplatten mit einer alternierenden Bewegung auf die Folie einwirken und dabei die Folie entlang eines oder mehrerer Linearabschnitte zusammendrücken;
- zumindest eine Schneidgruppe (24, 26), welche die einzelnen Beutel voneinander trennt, die nach dem Schweißvorgang dieser Folie erhalten wurden,
wobei die untere Schweißplatte (22) in Wirkverbindung mit einer Basis (30) steht, während die obere Schweißplatte (20) mit einer alternierenden Bewegung entlang einer Vielzahl von vertikalen Führungssäulen (32) bewegbar ist und oben durch vier Bewegungsmittel (36, 38) festgehalten ist, die an den Eckpunkten eines Rechtecks angeordnet sind und denen eine Abdeckung (40) zugeordnet ist, die über diese vertikale Führungssäulen (32) befestigt ist, wobei jeder einzelne der Bewegungsmittel (36, 38) aus einer Schraube (36) besteht, die vertikal in eine jeweilige über der Abdeckung (40) angebrachten Schraubenmutter (38) gleitet und durch einen jeweiligen mit der Abdeckung (40) integral gefertigten Antrieb (42) angetrieben wird, jede Schraube (36) mit Steuermittel (48, 50) zur Steuerung der aktuellen Position versehen ist, wobei die untere Schweißplatte (22) mit zumindest drei Sensormitteln (46) versehen ist, die aus Wägezellen zum sofortigen Erfassen der an jedem Krafteinleitungspunkt gemessenen Druckbelastung bestehen, welche die obere Schweißplatte (20) auf die untere Schweißplatte (22) ausübt, wobei jeder Antrieb (42) mit einer elektronischen Steuerungseinheit wirkverbunden ist, welche in der Lage ist, die Funktion aller Antriebe (42) zu verwalten; diese elektronische Steuerungseinheit in der Lage ist, alle Antriebe (42) gleichzeitig und perfekt synchronisiert anzutreiben, sowie alle Funktionsparameter unter Kontrolle zu halten, um eine stets regel- und gleichmäßige Bewegung der oberen Schweißplatte (20) zu gewährleisten; diese Sensormittel (46) mit der elektronischen Steuerungseinheit wirkverbunden sind, um dieser elektronischen Steuerungseinheit die Signale betreffend die an jedem Krafteinleitungspunkt gemessene, durch jeden "Aufprall" der oberen Schweißplatte (20) auf der unteren Schweißplatte (22) erzeugten Druckbelastung zu senden; diese Signale durch diese elektronische Steuerungseinheit interpretiert werden, um die Funktion jedes einzelnen Antriebs (42) unabhängig zu verwalten; und diese Steuermittel (48, 50) mit der elektronischen Steuerungseinheit wirkverbunden sind, um zu überprüfen, ob die aktuelle Position mit der gesteuerten Position und mit der aktuellen Position aller restlichen Schrauben (36) übereinstimmt und, um die perfekte Synchronisation der simultanen Bewegung der Schrauben (36) zu überprüfen, und damit die Bewegungshomogenität der oberen Schweißplatte (20) zu gewährleisten.

2. Maschine (10) nach Anspruch 1, **dadurch gekennzeichnet, dass** alle Antriebe (42) identisch zueinander sind und äquidistant zu den jeweiligen Bewegungsmitteln (36, 38) angeordnet sind, um die Last- und die Druckwirkung auf der oberen Schweißplatte (20) gleichmäßig zu gestalten und hierdurch eine Bewegung der oberen Schweißplatte (20) gegenüber der unteren Schweißplatte (22) zu erhalten, die so linear und so gleichmäßig wie möglich ist.

3. Maschine (10) nach Anspruch 1, **dadurch gekennzeichnet, dass** jeder Antrieb (42) mit der jeweiligen Schraube (36) durch entsprechende Bewegungsübertragungsmittel (44) wirkverbunden ist.

4. Maschine (10) nach Anspruch 3, **dadurch gekennzeichnet, dass** diese Bewegungsübertragungsmittel (44) aus einem Zahnriemen bestehen, das zwischen jedem Antrieb (42) und der entsprechenden Schraube (36) angeordnet ist.

5. Maschine (10) nach Anspruch 1, **dadurch gekennzeichnet, dass** diese Sensormittel (46) zwischen der unteren Schweißplatte (22) und der Basis (30) angeordnet sind.

6. Maschine (10) nach Anspruch 1, **dadurch gekennzeichnet, dass** diese Steuermittel (48, 50) aus einem Winkelgeber (48) bzw. Encoder bestehen, der mit einem jeweiligen, mit jeder Schraube (36) verbundenen Getriebe (50) versehen ist.

7. Maschine (10) nach irgendeinem der Ansprüche von 1 bis 6, **dadurch gekennzeichnet, dass** die obere Schweißplatte (20) aus einer Tragplatte (52), die gleitend an den vertikalen Führungssäulen (32) festgehalten ist und aus einem Schweißelement (54) besteht, das im Verhältnis zu dieser Tragplatte (52) abnehmbar ist, um das Format der auf der Maschine (10) hergestellten Beutel zu ändern, oder um Wartungsarbeiten an der Maschine (10) vorzunehmen.

8. Maschine (10) nach Anspruch 7, **dadurch gekennzeichnet, dass** das Schweißelement (54) durch eine horizontale Führungsstange (56) gehalten wird, die an der Tragplatte (52) festgehalten ist, wobei dieses Schweißelement (54) integral mit dieser horizontalen Führungsstange (56) durch entsprechende Befestigungsmittel (58), in der Betriebskonfiguration der oberen Schweißplatte (20) gefertigt ist; dieses Schweißelement (54) horizontal entlang dieser horizontalen Führungsstange (56) gleitet, wenn diese Befestigungsmittel (58) gelöst sind.

9. Maschine (10) nach Anspruch 8, **dadurch gekennzeichnet, dass** das Schweißelement (54) ebenso direkt mit der Tragplatte (52) durch eine Vielzahl von Blockierschauben (60) integral gefertigt ist.

10. Maschine (10) nach irgendeinem der vorhergehenden Ansprüche, **dadurch gekennzeichnet, dass** die Basis (30) auf entsprechende Linearführungen (34) montiert ist, welche die Bewegung der Schweißgruppe (18) entlang einer horizontalen Ebene zur Anpassung des Typs und der Abmessungen der herzustellenden Beutel ermöglichen.

## Revendications

1. Machine (10) pour produire des sacs de matériau souple comprenant :
- un groupe porte-dévidoir (12) qui porte d'une manière amovible au moins un dévidoir (14, 16) apte à fournir au moins un film de matériau souple ;
- un groupe de soudage (18) muni d'au moins une plaque de soudage supérieure (20) et d'au moins une plaque de soudage inférieure correspondante (22) qui sont chauffées et munies de pistes de soudage linéaires correspondantes, lesdites plaques de soudage supérieure (20) et inférieure (22) agissant sur ledit film selon un mouvement de va-et-vient vertical, en pinçant ledit film le long d'une ou de plusieurs parties linéaires ;
- au moins un groupe de découpe (24, 26) qui sépare les uns des autres les sacs individuels qui viennent d'être obtenus à la suite de l'opération de soudage sur ledit film,
dans laquelle la plaque de soudage inférieure (22) est reliée de manière fonctionnelle à une base (30), tandis que la plaque de soudage supérieure (20) est mobile avec un mouvement de va-et-vient le long d'une pluralité de colonnes de guidage vertical (32) et est contrainte sur sa partie supérieure sur quatre moyens de déplacement (36, 38) agencés sur les sommets d'un rectangle et associés à un couvercle (40) fixé au-dessus desdites colonnes de guidage vertical (32), chacun des moyens de déplacement uniques (36, 38) étant constitué d'une vis (36) qui coulisse verticalement à l'intérieur d'une vis femelle respective (38) obtenue à travers le couvercle (40) et est entraînée par un moteur respectif (42) solidaire du couvercle (40), chaque vis (36) étant munie de moyens de commande (48, 50) de sa position actuelle, dans laquelle la plaque de soudage inférieure (22) est munie d'au moins trois moyens de capteur (46) constitués de cellules de pesage aptes à détecter instantanément la charge de compression, mesurée à chaque point de force, que la plaque de soudage supérieure (20) confère sur ladite plaque de soudage inférieure (22), dans laquelle chaque moteur (42) est relié de manière fonctionnelle à une unité de commande électronique apte à gérer le fonctionnement de tous les moteurs (42), ladite unité de commande électronique étant apte à activer simultanément et en parfaite synchronisation tous les moteurs (42), ainsi que de maintenir commandés tous les paramètres de fonctionnement afin que le mouvement de la plaque de soudage supérieure (20) soit toujours régulier et uniforme, et lesdits moyens de capteur (46) étant reliés de manière fonctionnelle à l'unité de commande électronique afin d'envoyer à ladite unité de commande électronique les signaux relatifs à la charge de compression, mesurée à tous les points de force, dérivés de chaque « course » réalisée par ladite plaque de soudage supérieure (20) sur ladite plaque de soudage inférieure (22), lesdits signaux étant interprétés par ladite unité de commande électronique afin de gérer de manière indépendante le fonctionnement de chaque moteur unique (42), et lesdits moyens de commande (48, 50) étant reliés de manière fonctionnelle à l'unité de commande électronique afin de vérifier que ladite position actuelle coïncide avec la position commandée et avec la position actuelle de toutes les vis restantes (36) et de vérifier la synchronisation parfaite du mouvement simultané des vis (36), garantissant par conséquent l'homogénéité de mouvement de la plaque de soudage supérieure (20).

2. Machine (10) selon la revendication 1, **caractérisée en ce que** tous les moteurs (42) sont identiques les uns aux autres et sont agencés de manière équidistante par rapport aux moyens de déplacement respectifs (36, 38), afin de rendre uniformise à la fois la charge et l'action de poussée sur la plaque de soudage supérieure (20) afin d'obtenir un mouvement aussi linéaire et homogène que possible de ladite plaque de soudage supérieure (20) par rapport à la plaque de soudage inférieure (22).

3. Machine (10) selon la revendication 1, **caractérisée en ce que** chaque moteur (42) est relié de manière fonctionnelle à la vis respective (36) par l'intermédiaire de moyens de transmission de mouvement correspondants (44).

4. Machine (10) selon la revendication 3, **caractérisée en ce que** lesdits moyens de transmission de mouvement (44) sont constitués d'une courroie dentée interposée entre chaque moteur (42) et la vis respective (36).

5. Machine (10) selon la revendication 1, **caractérisée en ce que** lesdits moyens de capteur (46) sont interposés entre la plaque de soudage inférieure (22) et la base (30).

6. Machine (10) selon la revendication 1, **caractérisée en ce que** lesdits moyens de commande (48, 50) sont constitués d'un transducteur de position angulaire (48), ou codeur, muni d'un pignon respectif (50) relié à chaque vis (36).

7. Machine (10) selon l'une quelconque des revendications 1 à 6, **caractérisée en ce que** la plaque de soudage supérieure (20) est constituée d'une plaque de support (52), contrainte de manière coulissante sur les colonnes de guidage vertical (32), et d'un élément de soudage (54), amovible par rapport à ladite plaque de support (52) afin de modifier le format des sacs qui sont produits sur la machine (10), ou pour des opérations de maintenance de ladite machine (10).

8. Machine (10) selon la revendication 7, **caractérisée en ce que** l'élément de soudage (54) est porté par une tige de guidage horizontal (56) contrainte sur la plaque de support (52), ledit élément de soudage (54) étant rendu solidaire de ladite tige de guidage horizontal (56) par l'intermédiaire de moyens de fixation correspondants (58) dans la configuration fonctionnelle de la plaque de soudage supérieure (20), ledit élément de soudage (54) coulissant horizontalement le long de ladite tige de guidage horizontal (56) lorsque lesdits moyens de fixation (58) sont desserrés.

9. Machine (10) selon la revendication 8, **caractérisée en ce que** l'élément de soudage (54) est également rendu solidaire directement de la plaque de support (52) par l'intermédiaire d'une pluralité de vis de blocage (60).

10. Machine (10) selon l'une quelconque des revendications précédentes, **caractérisée en ce que** la base (30) est montée sur des guides linéaires correspondants (34) qui permettent au groupe de soudage (18) d'être déplacé le long d'un plan horizontal afin de s'adapter au type et aux dimensions des sacs à produire.
